# EUROPEAN PATENT SPECIFICATION

(11) **EP 0 921 934 B1**
(45) Date of publication and mention of the grant of the patent: **20.11.2002**
(21) Application number: 97907563.7
(22) Date of filing: 30.01.1997
(51) Int. Cl.: B29D 30/04, B60C 5/00

(54) **SEMI-PNEUMATIC MINE SERVICE TIRE**
HALBPNEUMATISCHER GELÄNDEGÄNGER REIFEN
PNEU SEMI-PNEUMATIQUE DESTINE A UN USAGE MINIER

(43) Date of publication of application: 16.06.1999
(73) Proprietor: THE GOODYEAR TIRE & RUBBER COMPANY, Akron, Ohio 44316-0001 (US)
(72) Inventor: JASANI, Shirish, Rasikchandra, Akron, OH 44333 (US); MALIN, Jerry, Akron, OH 44333 (US); RAYMAN, William, Earl, Hartville, OH 44632 (US); REISINGER, Richard, Henry, Canton, OH 44718 (US)
(74) Representative: Leitz, Paul
(86) International application number: US9701768
(87) International publication number: WO98033642

(56) References cited:
- EP-A- 0 352 045
- DE-A- 3 711 785
- FR-A- 1 283 182
- FR-A- 2 354 192
- GB-A- 2 024 118
- US-A- 3 794 706
- US-A- 3 866 651
- US-A- 4 071 386

## Description

### Technical Field

This invention pertains to tire assemblies and to methods for forming such.

### Background Art

Tires for use in off-road applications, such as mine service tires, are subjected to conditions which require the tires to withstand punctures, especially in the tread regions. Solid-fill tires have been used in such applications. However, disadvantages of solid-fill tires include the facts that they generally run hotter than pneumatic tires and do not provide the cushioned ride of pneumatic tires.

Alternatives to solid-fill tires have been proposed in the art. For example, U.S. Patent No. 3,022,810 to Lambe discloses a tire and rim combination wherein the cavity between an inner surface of the tire and the rim may be partially filled with a resilient foam. Generally, the resilient foam is said to adhere to the wheel rim to form an air-tight seal. The foam may allegedly be prevented from adhering to the wheel rim at certain points to allow the introduction of compressed air through the wheel rim. The foam is compressed in the presence of introduced air or expanded to fill the cavity in the absence of air.

U.S. Patent No. 4,197,893 to O'Coin discloses a reusable shield for use within a tire casing. The outer surface of the shield mates with the inside surface of the casing and the inner surface of the shield is contoured to minimize the thickness at a flex point of the tire in order to purportedly reduce heat build-up and fatigue. A base ring fills the space between the wheel rim and the shield. Alternately, a pneumatic tube can be used in place of the ring. The outer surface of the shield does not adhere to the inside surface of the casing in order to allow removal and reuse of the shield. The shield is molded by fitting the base ring between a casing and a wheel by cutting a slit in the ring. The ring is also equipped with pull tabs to assist removal. An opening passage is formed through either the ring or the casing. Liquid urethane is then injected between the ring and the casing under pressure and allowed to harden.
There still exists a need in the art for a tire and method of producing such for use in off-road applications which provides puncture-resistance, especially in the tread region, which provides better performance than solid-fill tires.

EP-A- 352 045 discloses a method for filling a tire, which method comprises (i) positioning at least one insert capable of air entrapment into a tire casing and assembling the insert and the tire casing onto a wheel rim; (ii) providing a seal between the tire casing and the wheel rim; (iii) injecting a liquid polymeric filling material into the tire casing and exhausting air from the tire casing; and (iv) allowing the polymeric material to cure.

DE-A- 37 11 785 discloses a tire having foaming material injected between the tire casing and an inner air filled chamber.

### Disclosure of the Invention

The invention provides a method of forming a tire assembly and a tire assembly as defined in the claims.

The inventive semi-pneumatic tire 10 includes a tire assembly 12 for mounting on an associated rim 14. The tire assembly 12 includes a tire casing 22 and a lining 26. Tire casing 22 encloses a predetermined volume between an inner surface 38 thereof and the associated rim 14. The lining 26 occupies a portion of the enclosed volume with the remained of the enclosed volume being an inflation chamber 18.

The lining 26 comprises a radially inward surface 30 and a radially outward surface 32. The radially outward surface 32 conforms to the shape of the inner surface 38 of a tire casing 22. The inward surface 30 of the lining 26 cooperates with associated wheel rim 14 to define boundaries for inflation chamber 18.

The molding member 50 is generally ring-shaped having a first contoured surface 54. The first contoured surface 54 of the molding member 50 includes a tread-underlying portion, shoulder-underlying portions, and bead-underlying portions. The shape of the molding member 50 determines the contour of inward surface 30 of lining 26 and also the shape of the inflation chamber 18. The tread-underlying portion 58 of first surface 54 is generally parallel to the tread region 42 as indicated by the straight line between points 62,64. The shoulder-underlying portions 68 of the first surface 54 are convex in cross-section and symmetric about the circumferential centerline 76. The mating lining inward surface 30 therefore is concave in cross-section near the shoulder regions 78 of the tire casing 22. Points 82,84 indicate flex points on the first surface 54. The bead-underlying portions 90 of the first surface 54 are concave in cross-section and also symmetric about the circumferential centerline 76.

After curing, the tire assembly 12 is ready for in-service operation. In a preferred embodiment, the molding member 50 remains in the tire assembly 12 to produce an enclosed inflation chamber 18.

### Brief Description of Drawings

Figure 1 is a partially cut away perspective view of a semi-pneumatic tire and an associated rim.
Figure 2 is a cross-sectional, end view of a portion of a semi-pneumatic tire according to the invention.
Figure 3 is a cross-sectional, end view, partly in section, showing the contour of a molding member according to the invention.
Figure 4 is a cross-sectional, end view of one embodiment of a molding member.
Figure 4A is a partial perspective view of a spacer according to an embodiment of the invention.
Figure 5 is a cross-sectional, side view of a tire casing according to the invention.

### Detailed Description of the Invention

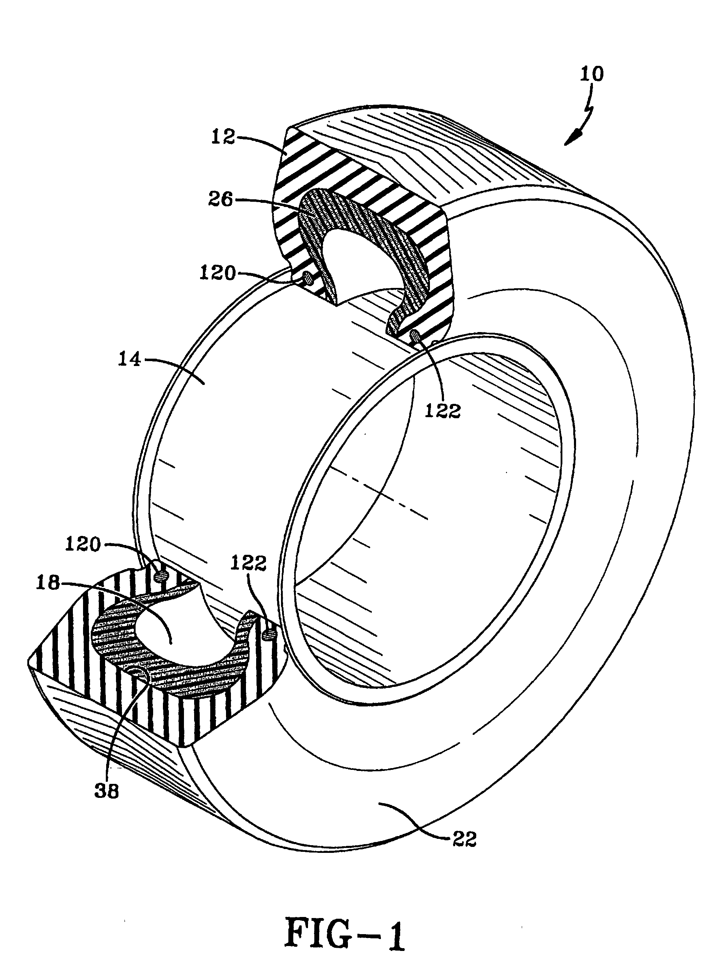

Referring now to the drawings wherein the showings are for purposes of illustrating a preferred embodiment of the invention only and not for purposes of limiting the same, Figure 1 shows a semi-pneumatic tire 10 according to the present invention. The semi-pneumatic tire 10 includes a tire assembly 12 mounted on an associated wheel rim 14. The tire assembly 12 cooperates with the associated rim 14 to form an inflation chamber 18 for containing inflation fluid, such as air. The tire assembly 12 includes a tire casing 22, beads 120,122 and a lining 26. Tire casing 22 encloses a predetermined volume between an inner surface 38 and the associated rim 14. The lining 26 occupies a portion of the enclosed volume with the remainder of the enclosed volume being the inflation chamber 18.

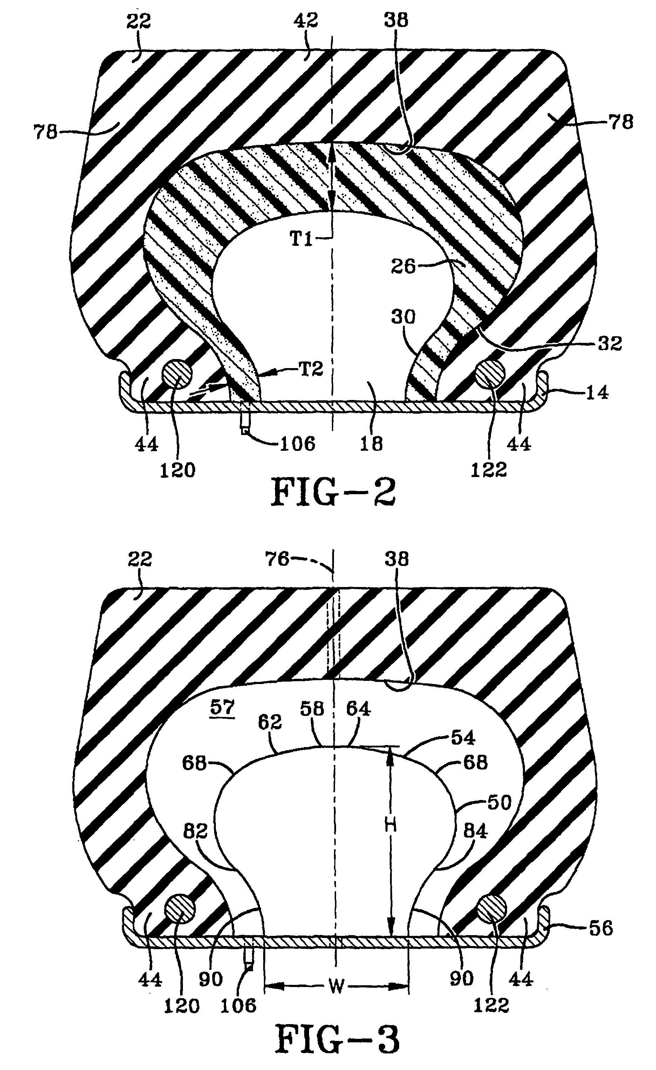

With reference to Figure 2, the lining 26 comprises an inward surface 30 and an outward surface 32. In a preferred embodiment, the lining 26 comprises soft urethane or other rubber-like material. The contour of the lining 26 is an important aspect of the present invention. The radially outward surface 32 conforms to the shape of the inner surface 38 of a tire casing 22. The outward surface 32 of the lining 26 is adhered to the inner surface of tire casing 22. As shown in Figure 2, the inward surface 30 comprises a different contour than outward surface 32. Therefore, the thickness of the lining 26 is not consistent throughout but includes a first thickness T₁ near the tread region 42 of the tire casing 22 and a second thickness T₂ near the bead region 44 of the tire casing 22. The thickness of the lining 26 is varied to match the need for puncture protection. In a preferred embodiment the first thickness T₁ is greater than a second thickness T₂. In one preferred embodiment T₁ is a maximum thickness of the lining 26.

The preferred methods for producing a semi-pneumatic tire 10 according to the invention will now be described with reference to Figures 1-5. According to one preferred method, and with particular reference to Figure 3, an annular molding member 50 is mounted about the rim band 104 of rim-like member 56. The molding member 50 includes a first contoured surface 54. As is evident from Figure 3, a first annular cavity 57 is defined between the inner surface 38 of the tire casing 22 and first surface 54 of the molding member 50 when the bead regions 44 of casing 22 are seated on firm-like member 56 by introduction of air through rim valve 106. The first cavity 57 will be occupied by the lining 26 as shown in Figure 2 and described later in this specification.

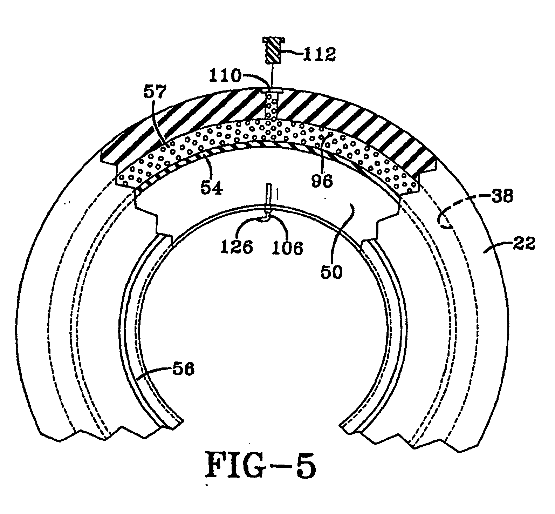

With particular reference to Figure 5, a vent hole 110 is drilled through the tire casing 22 at the centerline of the tire casing 22 at a position aligned with the location of the rim valve 106. Preferably, the vent hole 110 has a diameter of at least 0.25 inches (0.635 cm). The tire casing 22 is then vertically positioned, tread surface down, so that the exposed end 126 of the rim valve 106 projects directly downward and a centerline of the vent hole 110 is perpendicular and 90° to the floor. A flowable, curable fill material 96 is introduced into first cavity 57 to form lining 26 through the rim valve 106 until it begins to flow out through the vent hole 110. A plug or screw 112 is then inserted into the vent hole 110 and pressure of the flowable material 96 is increased to approximately 9 pounds per square inch (62 kPa). The filled assembly is then laid horizontally while the material cures. Preferably, the curable material 96 cures in approximately 24 hours at room temperature. It is believed that acceptable cures can be had with cures between 12 hours and 36 hours.

The contour of the first surface 54 of the molding member 50, and the inward surface 30 of the lining 26 will now be described in detail with reference to Figures 2 and 3. The tread-underlying portion 58 of first surface 54 is generally parallel to the tread region 42 as indicated by the straight line between points 62,64. The cross-sectional height H of the molding member 50 cooperates with inner surface 38 to determine the eventual thickness T₁ of the lining 26 near the tread region 42 of the tire casing 22. In a preferred embodiment, the molding member 50 has a height H which yields a thickness T₁ of at least 2.00 inches (5.1 cm). The shoulder-underlying portions 68 of the first surface 54 are convex in cross-section and symmetric about a circumferential centerline 76. The mating lining inward surface 30 therefore is concave in cross-section near the shoulder regions 78 of the tire casing 22. Points 82,84 indicate flex points on the first surface 54. The bead-underlying portions 90 of the first surface 54 are concave in cross-section and also symmetric about the circumferential centerline 76. Flex points 82 ,84 allows the lining to flex with the tire casing 22 during operation. In this way, lining 26 operates as an integral part of the tire. As is readily apparent, the inward surface 30 of the lining 26 is therefore convex near the bead regions 44 of the tire casing 22. The cross-sectional width W of the molding member 50 near the rim-like member 56 cooperates with inner surface 38 to determine the eventual thickness T₂ of the lining 26 near the bead regions 44 of the tire casing 22. In a preferred embodiment T₂ is between 0.5 inches and 0.8 inches (1,27 and 2 cm). The thickness T₁ is at least 2.5 T₂.

As the material 96 cures, first cavity 57 is filled and lining 26 is formed. Lining 26 therefore has an inward surface 30 which mates with the first surface 54 of the molding member 50. The lining 26 also has an outward surface 32 which mates with the inner surface 38 of tire casing 22. The lining 26 adheres to the inner surface 38 of the tire casing 22. The adherence of the lining 26 with inner surface 38 may be accomplished by a curing reaction of the material 96 with tire casing 22. Alternately, an adhesive may be applied to the inner surface 38 of the tire casing 22 before introduction of material 96. The lining 26 and the tire casing 22 together form a tire assembly 12. The adhesive can be chosen with sound engineering judgement.

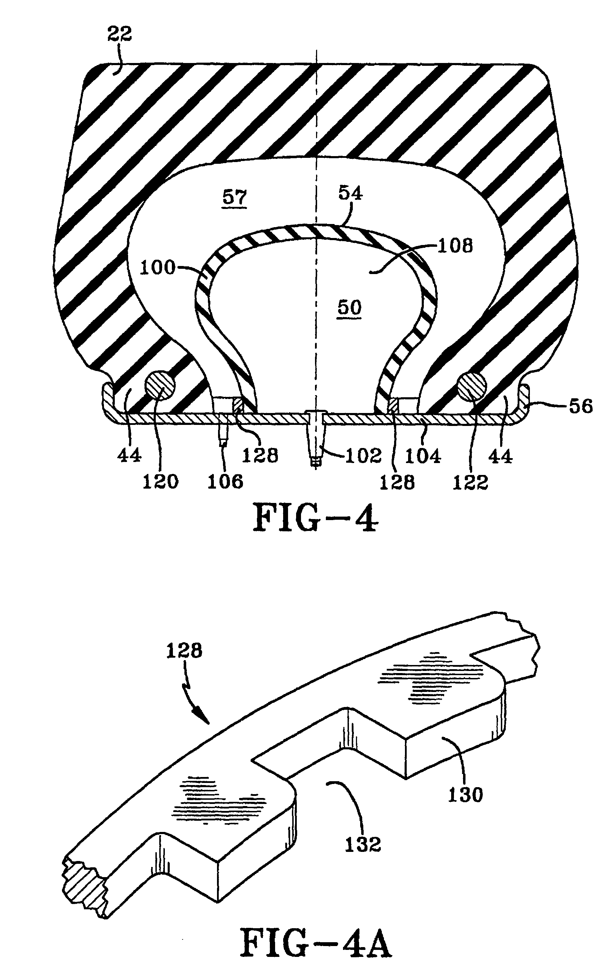

With reference to Figure 4, the molding member 50 comprises a generally hollow ring-shaped, toroidal airbag 100, having an airbag valve 102. Rim-like member 56 is adapted to receive airbag valve 102. Airbag 100 is inserted into the tire casing 22. The tire casing 22 and airbag 100 are then mounted about rim-like member 56. The airbag 100 is designed to have a stretch fit over the rim band 104. The bead regions 44 of the tire casing 22 are seated on rim-like member 56 by introducing air through a rim valve 106 by methods common and known in the art.

In a preferred embodiment, annular spacers 128 which are positioned adjacent rim-like member 56 may be used to separate the first surface 54 of the molding member 50 from the bead regions 44. The preferred configuration of the spacers 128 includes alternating protrusions, such as stand-off buttons 130, as shown in Figure 4A. The stand-off buttons 130 provide the spacing effect needed while the gaps 132 between the buttons 130 allow flexibility of the spacer 128 and reduce the volume occupied by a comparable solid spacer.

Air is introduced into the interior 108 of the airbag 100 through airbag valve 102 until the first contoured surface 54 assumes the molding configuration as described above with reference to Figure 3.

The molding member 50, in this case airbag 100, is retained in the tire assembly 12 during service. Therefore, rim-like member 56 is actually the service rim 14 for the tire 10.

The airbag 100 defines inflation chamber 18 and.

The molding member 50 preferably comprises rubber.

The curable fill material 96 may be any type of solidifiable, liquid material which fills the first cavity 57 upon curing. Preferred materials include a product available from the Goodyear Tire and Rubber Company and sold under the trade name "Wingfil™".

In a preferred embodiment, the lining 26 comprises approximately sixty percent (60%) of the volume enclosed by casing 22. It is believed the lining should be between forty percent and eighty percent.

In a preferred embodiment, the tire 10 is inflated with air at a pressure up to 150 pounds per square inch (1,03 MPa). It is believed that the lining 26 compresses slightly in response to the introduction of air.

The semi-pneumatic tire 10 of the present invention may be advantageously used as a mine service tire or in other heavy-use off-road applications.

## Claims

1. A method of forming a tire assembly (12) for mounting on an associated rim (14), the tire assembly including a tire casing (22) having a tread region (42), first and second shoulder regions (78), a pair of beads (120,122), and an inner concave surface (38), the tire assembly further including a lining (26) adjacent the inner surface of the tire casing, the method comprising the steps of:
a. positioning a molding member (50) in an interior of the tire casing (22), the molding member having a first contoured surface (54) and comprising a generally hollow ring-shaped, toroidal airbag (100);
b. mounting the tire casing and molding member onto a rim-like member (56), the rim-like member having a pair of spaced bead receiving areas, an annular rim band having an airbag valve (102) and a rim valve (106);
c. introducing air into the interior (108) of the airbag (100) through the airbag valve (102) until the first contoured surface (54) assumes the molding configuration;
d. seating the beads (120,122) on the bead receiving areas of the rim-like member by introducing air through the rim valve (106) so that a first cavity (57) is defined between the inner concave surface of the tire casing and the first surface (54) of the molding member;
e. drilling a vent hole (110) in the tire casing (22) at a centerline thereof in a position aligned with the rim valve (106);
f. injecting a flowable material (96) through the rim valve (106) into the first cavity (57) until the material passes through the vent hole (110);
g. plugging the vent hole and continue to inject the flowable material (96) until a predetermined internal pressure is reached;
h. forming the lining (26) by curing the material, the lining filling the first cavity and including an inward surface (30) mating with the first surface (54) of the molding member and an outward surface (32) mating with the inner surface (38) of the tire casing; and
i. leaving the molding member inside the tire assembly for the introduction of air pressure after the lining is cured.

2. The method of claim 1 using annular spacers (128) adjacent rim-like member (56) to separate the first surface (54) of the molding member (50) from the bead region (44).

3. The method claim 2 wherein the annular spacers include alternating protrusions, such as stand-off buttons (130).

4. The method of claim 1 comprising the step of vertically mounting the tire casing (22) and rim-like member (56) so that the rim valve (106) is in a downward position and the vent hole (110) is positioned perpendicular to the horizontal before the step of injecting the flowable material (96).

5. The method of claim 1 wherein the step of forming the lining (26) by curing the material comprises arranging the tire casing and rim-like member so that the tire's mid-circumferential plane is in a horizontal position for a predetermined time period.

6. A tire assembly (12) mounted on an associated rim (14), the tire assembly including a casing (22) having a tread region (42), first and second shoulder regions (78), a pair of beads (120,122) and an inner concave surface (38), and a lining (26), the lining being radially inwardly of the casing (22) and having a radially outward surface (32) adjacent said inner concave surface (38), the tire assembly comprising a contoured radially inward surface (30) of the lining (26) cooperating with associated wheel rim (14) to define boundaries for an inflation chamber (18) having a valve (102), the lining (26) being concave in first and second shoulder-underlying regions (68), and convex in first and second bead-underlying regions (90); **characterized**
- **by** the inward surface of the lining (26) being substantially parallel to the tread region in a tread-underlying region (58),
- by the radially outward surface (32) of the lining mating with the inner concave surface (38) of the casing (22);
- by the inflation chamber being a toroidal airbag (100); and
- by the lining (26) including a first cross-sectional thickness T1 in the tread-underlying region (58) and a second cross-sectional thickness T2 in the bead-underlying regions (90), wherein T1 is at least 2.0 inches (5,08 cm).

7. The tire assembly of claim 6 wherein T2 is between 0.5 inches (1,27 cm) and 0.8 inches (2,03 cm).

8. The tire assembly of claim 6 comprising an annular spacer (128) adjacent said rim (14) and positioned between said radially inward surface (30) of said lining (26) and said pair of beads (120,122) for separating said surface from said beads.

9. The tire assembly of claim 6 wherein the lining (26) occupies between forty percent and eighty percent of an interior volume defined by the inner surface (38) of the casing.

10. The tire assembly of claim 6 wherein the lining (26) comprises soft urethane.

## Patentansprüche

1. Verfahren zum Ausbilden einer Reifenanordnung (12) zur Montage auf eine zugehörige Felge (14), wobei die Reifenanordnung einen Reifen-Unterbau (22) mit einem Laufstreifen-Bereich (42), ersten und zweiten Schulterbereichen (78), einem Paar Wülsten (120, 122) und einer konkaven Innenfläche (38) enthält, und wobei die Reifenanordnung weiter eine der Innenfläche des Reifen-Unterbaus benachbarte Auskleidung (26) enthält, und das Verfahren die Schritte umfasst:
a. dass ein Formungsglied (50) in einen Innenraum des Reifen-Unterbaus (22) eingesetzt wird, wobei das Formungsglied eine erste konturierte Oberfläche (54) aufweist und eine allgemein hohle, ringförmige, toroidale Luftmembrane (100) umfasst;
b. dass der Reifen-Unterbau und das Formungsglied auf ein felgenartiges Teil (56) montiert werden, wobei das felgenartige Teil ein Paar voneinander beabstandete Wulstaufnahmebereiche, ein ringförmiges Felgenband mit einem Luftmembranventil (102) und ein Felgenventil (106) besitzt;
c. dass in den Innenraum (108) der Luftmembran (100) durch das Luftmembranventil (102) Luft eingeleitet wird, bis die erste konturierte Oberfläche (54) die Formungsgestalt annimmt;
d. dass die Wülste (120, 122) durch Einführen von Luft durch das Felgenventil (106) auf die Wulstaufnahmebereiche des felgenartigen Teils so aufgesetzt werden, dass der erste Hohlraum (57) zwischen der inneren konkaven Fläche des Reifen-Unterbaus und der ersten Oberfläche (54) des Formungsglieds bestimmt wird;
e. dass eine Entlüftungsbohrung (110) in den Reifen-Unterbau (22) an einer Mittellinie desselben in einer Position gebohrt wird, die mit dem Felgenventil (106) ausgerichtet ist;
f. dass ein fließfähiges Material (96) durch das Felgenventil (106) in den ersten Hohlraum (57) eingespritzt wird, bis das Material durch die Entlüftungsbohrung (110) hindurchtritt;
g. dass die Entlüftungsbohrung verstopft wird und das Einspritzen des fließfähigen Materials (96) fortgesetzt wird, bis ein vorgegebener Innendruck erreicht wird;
h. dass die Auskleidung (26) durch Härten des Materials gebildet wird, wobei die Auskleidung den ersten Hohlraum füllt und eine nach innen gewendete Fläche (30) enthält, die zu der ersten Oberfläche (54) des Formungsglieds passt, und eine nach außen gewendete Fläche (32), die zu der Innenfläche (38) des Reifen-Unterbaus passt; und
i. dass das Formungsglied innerhalb der Reifenanordnung zum Einführen des Luftdrucks belassen wird, nachdem die Auskleidung gehärtet ist.

2. Verfahren nach Anspruch 1, bei dem ringförmige Abstandsteile (128) dem felgenartigen Teil (56) benachbart benutzt werden, um die erste Oberfläche (54) des Formungsglieds (50) von dem Wulstbereich (44) zu trennen.

3. Verfahren nach Anspruch 2, bei dem die ringförmigen Abstandsteile abwechselnde Vorsprünge wie Stehknöpfe (130) enthalten.

4. Verfahren nach Anspruch 1 mit dem Schritt, dass der Reifen-Unterbau (22) und das felgenartige Teil (56) so vertikal montiert werden, dass das Felgenventil (106) sich in einer nach unten gerichteten Position befindet und die Entlüftungsbohrung (110) senkrecht zur Horizontalen positioniert ist, vor dem Schritt, bei dem das fließfähige Material (96) eingespritzt wird.

5. Verfahren nach Anspruch 1, bei dem der Schritt, dass die Auskleidung (26) durch Härten des Materials gebildet wird, das Anordnen des Reifen-Unterbaus und des felgenartigen Teils in der Weise umfasst, dass die Mitten-Umfangsebene des Reifens sich während eines vorgegebenen Zeitraums in einer horizontalen Position befindet.

6. Reifenanordnung (12), die auf einer zugeordneten Felge (14) montiert ist, wobei die Reifenanordnung einen Unterbau (22) mit einem Laufstreifenbereich (42), ersten und zweiten Schulterbereichen (78), einem Paar Wülsten (120, 122) und einer konkaven Innenfläche (38) sowie eine Auskleidung (26) enthält, die Auskleidung sich radial innerhalb des Unterbaus (22) befindet und eine radial nach außen gewendete Fläche (32) benachbart zu der konkaven Innenfläche (38) aufweist, die Reifenanordnung eine konturierte radial nach innen gewendete Fläche (30) der Auskleidung (26) umfasst, welche mit der zugeordneten Radfelge (14) zum Bestimmen von Begrenzungen für eine Aufpumpkammer (18) mit einem Ventil (102) zusammenwirkt, wobei die Auskleidung (26) in ersten und zweiten unter den Schultern liegenden Bereichen (68) konkav ist und in ersten und zweiten unter den Wülsten liegenden Bereichen (90) konvex ist,
**dadurch gekennzeichnet,**
**dass** die nach innen gewendete Fläche der Auskleidung (26) im wesentlichen parallel zum Laufstreifenbereich in einem unter dem Laufstreifen liegenden Bereich (58) ist,
**dass** die radial nach außen gewendete Fläche (32) der Auskleidung zu der inneren konkaven Fläche (38) des Unterbaus (22) passt;
**dass** die Aufpumpkammer eine toroidförmige Luftmembran (100) ist; und
**dass** die Auskleidung (26) eine erste Querschnittsdicke T1 in dem unter dem Laufstreifen liegenden Bereich (58) und eine zweite Querschnittsdicke T2 in den unter den Wülsten liegenden Bereichen (90) aufweist, wobei T1 mindestens 5,08 cm (2,0 inch) beträgt.

7. Reifenanordnung nach Anspruch 6, bei der T2 zwischen 1,27 cm (0,5 inch) und 2,03 cm (0,8 inch) beträgt.

8. Reifenanordnung nach Anspruch 6, welche ein ringförmiges Abstandsstück (128) der Felge (14) benachbart und zwischen der radial nach innen gewendeten Fläche (30) der Auskleidung (26) und dem Wülstepaar (120, 122) positioniert umfasst, um die Oberfläche von den Wülsten zu trennen.

9. Reifenanordnung nach Anspruch 6, bei der die Auskleidung (26) zwischen vierzig Prozent und achtzig Prozent eines durch die Innenfläche (38) des Unterbaus bestimmten Innenvolumens einnimmt.

10. Reifenanordnung nach Anspruch 6, bei der die Auskleidung (26) aus Weich-Urethan gebildet ist.

## Revendications

1. Procédé de formation d'un assemblage de bandage pneumatique (12) à monter sur une jante associée (14), l'assemblage de bandage pneumatique englobant une carcasse de bandage pneumatique (22) possédant une région de bande de roulement (42), des première et deuxième régions d'épaulements (78), une paire de talons (120, 122) et une surface concave interne (38), l'assemblage de bandage pneumatique englobant en outre un calandrage intérieur (26) en position adjacente à la surface interne de la carcasse de bandage pneumatique, le procédé comprenant les étapes consistant à :
a. positionner un élément de moulage (50) à l'intérieur de la carcasse de bandage pneumatique (22), l'élément de moulage possédant une première surface profilée (54) et comprenant un coussin pneumatique toroïdal (100) de forme annulaire généralement creux ;
b. monter la carcasse de bandage pneumatique et l'élément de moulage sur un élément (56) en forme de jante, l'élément en forme de jante possédant une paire de zones de réception de talons espacées, un ruban pour jante annulaire possédant une valve de coussin pneumatique (102) et une valve de jante (106) ;
c. introduire de l'air à l'intérieur (108) du coussin pneumatique (100) à travers la valve de coussin pneumatique (102) jusqu'à ce que la première surface profilée (54) épouse la configuration de moulage ;
d. disposer les talons (120, 122) sur les zones de réception de talons de l'élément en forme de jante en introduisant de l'air à travers la valve de jante (106) de façon à définir une première cavité (57) entre la surface concave interne de la carcasse de bandage pneumatique et la première surface (54) de l'élément de moulage ;
e. forer un trou d'aération (110) dans la carcasse de bandage pneumatique (22) sur la ligne médiane de cette dernière dans une position en alignement avec la valve de jante (106) ;
f. injecter une matière (96) apte à s'écouler à travers la valve de jante (106) dans la première cavité (57) jusqu'à ce que la matière passe à travers le trou d'aération (110) ;
g. obturer le trou d'aération et poursuivre l'injection de la matière apte à s'écouler (96) jusqu'à ce que l'on atteigne une pression interne prédéterminée;
h. former le calandrage intérieur (26) par vulcanisation de la matière, le calandrage intérieur remplissant la première cavité et englobant une surface interne (30) venant buter contre la première surface (54) de l'élément de moulage et une surface externe (32) venant buter contre la surface interne (38) de la carcasse de bandage pneumatique ; et
i. laisser l'élément de moulage à l'intérieur de l'assemblage de bandage pneumatique pour l'introduction de pression d'air après la vulcanisation du calandrage intérieur.

2. Procédé selon la revendication 1, dans lequel on utilise des pièces d'écartement annulaires (128) en position adjacente à l'élément en forme de jante (56) pour séparer la première surface (54) de l'élément de moulage (50) de la région de talon (44).

3. Procédé selon la revendication 2, dans lequel les pièces d'écartement annulaires englobent des saillies alternantes tels que des boutons d'éloignement (130).

4. Procédé selon la revendication 1, comprenant l'étape consistant à monter verticalement la carcasse de bandage pneumatique (22) et l'élément (56) en forme de jante de telle sorte que la valve de jante (106) se trouve dans une position orientée vers le bas et de telle sorte que le trou d'aération (110) est disposé perpendiculairement à l'horizontale avant l'étape d'injection de la matière apte à s'écouler (96).

5. Procédé selon la revendication 1, dans lequel l'étape consistant à former le calandrage intérieur (26) par vulcanisation de la matière, comprend le fait d'arranger la carcasse de bandage pneumatique et l'élément en forme de jante de telle sorte que le plan circonférentiel médian du bandage pneumatique se trouve dans une position horizontale pendant un laps de temps prédéterminé.

6. Assemblage de bandage pneumatique (12) monté sur une jante associée (14), l'assemblage de bandage pneumatique englobant une carcasse (22) possédant une région de bande de roulement (42), des première et deuxième régions d'épaulements (78), une paire de talons (120, 122) et une surface concave interne (38), ainsi qu'un calandrage intérieur (26), le calandrage intérieur étant disposé à l'intérieur de la carcasse (22) en direction radiale et possédant une surface externe (32) en direction radiale en position adjacente à ladite surface concave interne (38), l'assemblage de bandage pneumatique comprenant une surface profilée (30) interne en direction radiale du calandrage intérieur (26) coopérant avec une jante de roue (14) afin de définir des limites pour une chambre de gonflage (18) possédant une valve (102), le calandrage intérieur (26) étant concave dans des régions sous-jacentes (68) aux premier et deuxième épaulements, et convexe dans des régions (90) sous-jacentes aux premier et deuxième talons ; **caractérisé**
- **par le fait que** la surface interne du calandrage intérieur (26) est essentiellement parallèle à la région de bande de roulement dans une région (58) sous-jacente à la bande de roulement ;
- **par le fait que** la surface externe (32) en direction radiale du calandrage intérieur vient buter contre la surface concave interne (38) de la carcasse (22);
- **par le fait que** la chambre de gonflage est un coussin pneumatique toroïdal (100) ; et
- **par le fait que** le calandrage intérieur (26) englobe une première épaisseur en section transversale T1 dans la région (58) sous-jacente à la bande de roulement et une deuxième épaisseur T2 en section transversale dans les régions (90) sous-jacentes aux talons, T1 s'élevant à au moins 2,0 pouces (5,08 cm).

7. Assemblage de bandage pneumatique selon la revendication 6, dans lequel T2 s'élève entre 0,5 pouce (1,27 cm) et 0,8 pouce (2,03 cm).

8. Assemblage de bandage pneumatique selon la revendication 6, comprenant une pièce d'écartement annulaire (128) en position adjacente à ladite jante (14) et positionnée entre ladite surface interne (30) en direction radiale dudit calandrage intérieur (26) et ladite paire de talons (120, 122) pour séparer ladite surface desdits talons.

9. Assemblage de bandage pneumatique selon la revendication 6, dans lequel le calandrage intérieur (26) occupe entre 40 % et 80 % du volume interne défini par la surface interne (38) de la carcasse.

10. L'assemblage de bandage pneumatique selon la revendication 6, dans lequel le calandrage intérieur (26) comprend de l'uréthane tendre.
